# EUROPEAN PATENT APPLICATION

(11) **EP 2 905 097 A2**
(43) Date of publication of application: **12.08.2015**
(21) Application number: 15153881.6
(22) Date of filing: 05.02.2015
(51) Int. Cl.: B22F 3/105

(54) **ARTICLE PRODUCED BY ADDITIVE MANUFACTURING**

(30) Priority: 11.02.2014 US 201414177270
(71) Applicant: General Electric Company, Schenectady, New York 12345 (US)
(72) Inventor: Schick, David Edward, Greenville, SC 29615 (US); Dimascio, Paul Stephen, Greenville, SC 29615 (US); Lacy, Benjamin Paul, Greenville, SC 29615 (US); Drake, Susan Carol, Greenville, SC 29615-4614 (US); Battiste , Thomas Joseph, Greenville, SC 29615-4614 (US)
(74) Representative: Lee, Brenda

(57) **Abstract**

An article 200 includes at least one first portion 220, wherein the at least one first portion is additively manufactured by depositing successive layers of one or more materials upon a surface such that a three dimensional structure is obtained; at least one second portion 230 affixed the at least one first portion, the at least one second portion including a substantially planar member, and further including at least one bottom surface 232 and at least one top surface 234; and at least one third portion, wherein the at least one third portion 240 is additively manufactured by depositing successive layers of one or more materials upon the at least one top surface such that a three dimensional structure is obtained.

## Description

### BACKGROUND OF THE INVENTION

The present invention relates generally to an article manufactured using an additive method; and, more particularly, to an additively manufactured article including at least one substantially planar member that may define a surface of a cavity or undercut region contained within the finished article.

Additive manufacturing is a method by which an article is built one layer at a time using a specialized system. More specifically, a layer of powder material may be deposited onto a substrate and melted or sintered through exposure to a concentrated source of energy, such as a laser or electron beam, thereby consolidating the powder into a substantially solid form. Successive layers of the same or different powder material may be deposited and consolidated in this manner to produce an article. Each of these successive layers may also be bonded to the preceding layer by melting or sintering the surface region of the preceding layer through exposure to the same concentrated source of energy. The deposition of the powder material and movement of the energy source may be controlled by a computer to achieve a high degree of precision during the additive manufacturing sequence.

It is sometimes advantageous to manufacture an article containing cavities, undercut regions, or both using an additive manufacturing method, for reasons of reduced cost, reduced time, increased yield, or greater flexibility for customization of the articles thereby produced. However, downward facing surfaces of cavities and undercut regions typically require complex support structures to prevent these surfaces distorting during the deposition, consolidation, and joining of successive layers above. Furthermore, the complex support structures may be difficult and time consuming to remove, may degrade the surface finish of the downward facing surfaces following their removal, or may be inaccessible and therefore unable to be removed after the build is complete.

It is therefore desirable to form a cavity or undercut region in an additively manufactured article by including at least one substantially planar member that may support successive layers deposited during the additive manufacturing sequence and may also define at least one downward facing surface of the cavity or undercut region within the finished article. The planar member may be formed using an additive or non-additive manufacturing method that results in a high quality surface finish on the downward facing surface.

### BRIEF DESCRIPTION OF THE INVENTION

Embodiments of the present invention are summarized below. These embodiments are not intended to limit the scope of the claimed invention, but rather, these embodiments are intended only to provide a brief summary of possible forms of the invention. Furthermore, the invention may encompass a variety of forms that may be similar to or different from the embodiments set forth below, commensurate with the scope of the claims.

According to a first embodiment of the present invention, an article includes at least one first portion, wherein the at least one first portion is additively manufactured by depositing successive layers of one or more materials upon a surface such that a three dimensional structure is obtained; at least one second portion affixed the at least one first portion, the at least one second portion including a substantially planar member, and further including at least one bottom surface and at least one top surface; and at least one third portion, wherein the at least one third portion is additively manufactured by depositing successive layers of one or more materials upon the at least one top surface such that a three dimensional structure is obtained.

According to a second embodiment of the present invention, a method of manufacturing an article includes the steps of preparing at least one first portion by depositing successive layers of one or more materials upon a surface such that a three dimensional structure is obtained; preparing at least one second portion including a substantially planar member, and further including at least one bottom surface and at least one top surface, wherein the at least one second portion is affixed to the at least one first portion; and preparing at least one third portion by depositing successive layers of one or more materials upon the at least one top surface such that a three dimensional structure is obtained.

### BRIEF DESCRIPTION OF THE DRAWINGS

These and other features, aspects and advantages of the present invention may become better understood when the following detailed description is read with reference to the accompanying figures (FIGS), wherein like reference numerals refer to like parts throughout the various views unless otherwise specified.
FIG. 1 is a block diagram illustrating a prior art method for producing an article in accordance with aspects of the present invention.
FIG. 2 is a block diagram illustrating a method for producing an article in accordance with aspects of the present invention.
FIG. 3 is a cross-sectional view of an article produced in accordance with aspects of the present invention.
FIG. 4 is an expanded cross-sectional view of the article of FIG. 3 taken within the line 4-4.

### DETAILED DESCRIPTION OF THE INVENTION

Specific embodiments of the present invention are described below. This written description, when read with reference to the accompanying figures, provides sufficient detail to enable a person having ordinary skill in the art to practice the invention, including making and using any devices or systems and performing any incorporated methods. However, in an effort to provide a concise description of these embodiments, every feature of an actual implementation may not be described in the specification, and embodiments of the present invention may be employed in combination or embodied in alternate forms and should not be construed as limited to only the embodiments set forth herein. The scope of the invention is, therefore, indicated and limited only by the claims, and may include other embodiments that may occur to those skilled in the art.

The terminology used herein is for describing particular embodiments only and is not intended to be limiting of example embodiments. As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Similarly, the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like, when used without further limitation, merely describe the specific configuration illustrated in the various views. Similarly, the terms "first", "second", "primary", "secondary", and the like, when used without further limitation, are only used to distinguish one element from another and do not limit the elements described.

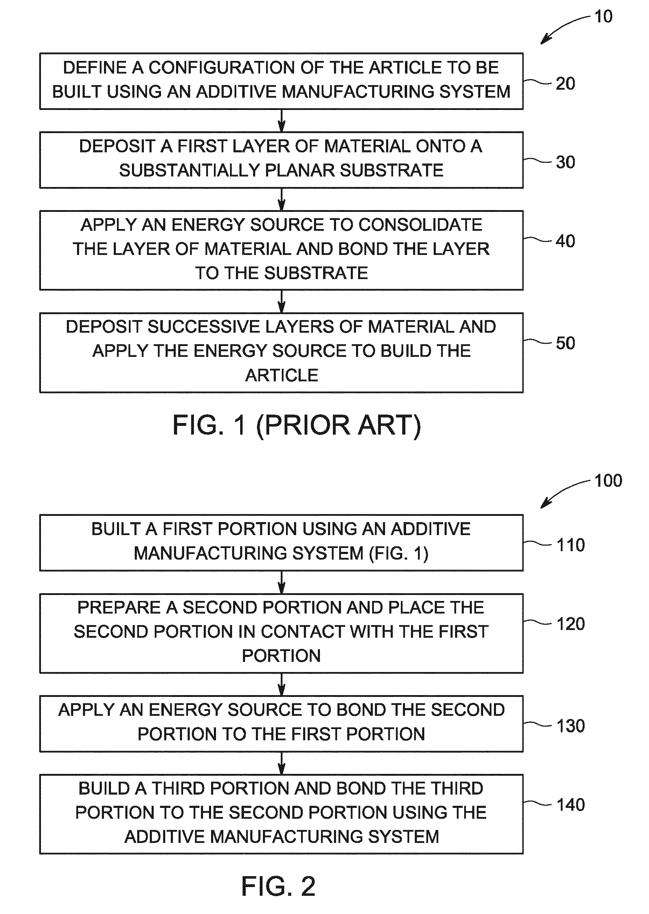

Referring now to the figures (FIGS), wherein like reference numerals refer to like parts throughout the various views unless otherwise specified, FIG. 1 is a block diagram illustrating a prior art method 10 for producing an article in accordance with aspects of the present invention. A configuration of the article to be built using an additive manufacturing method and system is defined using a computer (Block 20). The configuration definition may be subsequently altered such that the definition is usable by the additive manufacturing system. As used herein, the term "additive manufacturing" should be understood to describe a method by which an article is built by depositing, consolidating and bonding successive layers of material one on top of another; and the term "additive manufacturing system" should be understood to describe means for depositing, consolidating and bonding the successive layers of material within a closed chamber or other suitable space. A first layer of material may be deposited onto a substantially planar substrate by the additive manufacturing system (Block 30). The material may be in the form of a powder, and be of any suitable composition for building the article using the additive manufacturing system. One or more energy sources may be used to consolidate the first layer of material, and also to bond the first layer of material to the substrate (Block 40). The energy source may be concentrated in the form of a laser or electron beam, and the beam may be directed over the layer of material using a computer. The process may then be repeated such that successive layers of material are deposited, consolidated and bonded to one another until the article is substantially complete (Block 50).

FIG. 2 is a block diagram illustrating a method 100 for producing an article in accordance with aspects of the present invention. A first portion of the article may be built using an additive manufacturing system in accordance with the method generally described in FIG. 1 (Block 110). The additive manufacturing method may be either terminated or interrupted at a pre-defined location in the configuration. A second portion of any suitable composition and prepared using any suitable additive or non-additive method; such as machining, stamping, forging, rolling, and casting; may be placed in such a manner that the second portion rests upon and is substantially in contact with the first portion (Block 120). The first portion may also include particular features built using the additive manufacturing system, such as pockets or projections, to aid in locating the second portion. One or more energy sources may be used to bond the second portion to the first portion (Block 130), which may be the same energy source used during the additive manufacturing of the first portion, or a different energy source. A third portion of the article may be built using the additive manufacturing system, in accordance with the method generally described in FIG. 1, wherein the first layer of the third portion may be deposited upon and bonded to the second portion in a like manner to the substrate of FIG. 1 (Block 140). The method generally described in FIG. 2 may be repeated as many times as needed to produce the complete article.

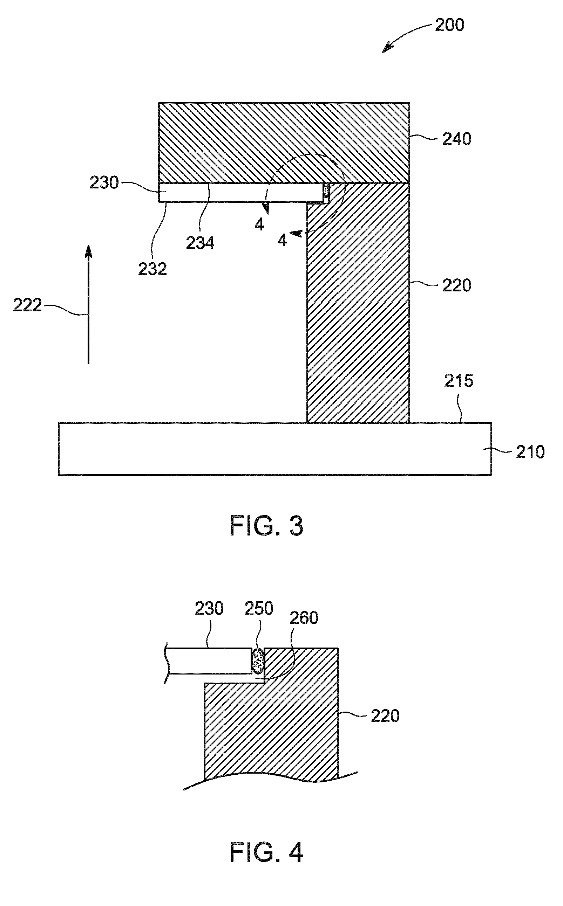

FIG. 3 is a cross-sectional view of an article produced in accordance with aspects of the present invention. A substantially planar substrate 210 having a surface 215 may be located in a closed chamber or other suitable space contained in an additive manufacturing system (not illustrated). A first portion 220 of the article may be built upon the surface 215 using the additive manufacturing system in accordance with the method generally described in FIGS. 1 and 2, wherein the build direction is generally indicated by the arrow 222. A second portion 230 of the article may then be placed upon and bonded to the first portion in accordance with the method generally described in FIG. 2, wherein the second portion includes a bottom surface 232 and a top surface 234. A third portion 240 of the article may then be built upon the top surface 234 using the additive manufacturing system in accordance with the method generally described in FIGS. 1 and 2, such that the bottom surface 232 creates a downward facing surface within the article.

In an exemplary embodiment, the composition of the first and third portions is Type 310 Stainless Steel alloy in powder form. The layers of material deposited using the additive manufacturing system have a thickness of about 20 microns to about 60 microns, resulting in a surface finish greater than about 10 microns, depending on the orientation of the surface relative to the build direction 222. The composition of the second portion is Type 304 Stainless Steel alloy in forged form and milled to a surface finish of about 3 to about 5 microns. Thus, the finish of the downward facing surface 232 is substantially higher than the finishes of the first and third portions.

FIG. 4 is an expanded cross-sectional view of the article of FIG. 3 taken within the line 4-4. The second portion 230 may be metallurgically bonded to the first portion 220 using a welding method, wherein a welding material 250 in wire, powder, or other suitable form may be placed in a gap 260 between the first and second portions, and an energy source (not illustrated) may be applied in such a manner that the welding element melts and produces a high strength joint between the first and second portions. In an exemplary embodiment, a gas tungsten arc welding method using Type 310 Stainless Steel alloy solid welding rod measuring about 0.035 inches (about 0.89 mm) diameter is used to bond the first and second portions, and the energy source may be the same as that used during the additive manufacturing of the first portion, or may be a different energy source.

The skilled practitioner will appreciate that other known methods for creating the high strength joint between the first and second portions may be used. In an embodiment, the second portion 230 may be metallurgically bonded to the first portion 220 using a brazing method, wherein a brazing material 250 may be placed in the gap 260 and an energy source may be applied to produce a high strength joint between the first and second portions. In another embodiment (not illustrated), the second portion 230 may be metallurgically bonded to the first portion 220 using a solid state method such as diffusion bonding, wherein the first and second portions are in direct contact and an energy source may be applied to produce a high strength joint between the first and second portions without the use of an additional element. In yet another embodiment (not illustrated), the second portion 230 may be metallurgically bonded to the first portion 220 using a solid state method such as friction welding or inertia welding, wherein the first and second portions are in direct contact and are caused to rapidly move relative to each other to produce a high strength joint between the first and second portions without the use of an additional element. In all embodiments requiring an energy source, the energy source may be the same as that used during the additive manufacturing of the first portion, or may be a different energy source.

If desired, the second portion 230 may be removed from the finished article using a thermal, chemical or mechanical process. In an exemplary embodiment, the second portion is coated with a high nickel brazing alloy, such as BNi-9, prior to placement upon and bonding to the first portion. The finished article is removed from the additive manufacturing system and placed in a brazing furnace having a suitable atmosphere and operating at about 2050 degrees F (about 1121 degrees C) for a suitable period of time to melt the coating, thereby releasing the second portion.

As described above, the present invention contemplates an additively manufactured article containing at least one cavity or undercut region, wherein at least one substantially planar member may be included to support successive layers deposited during the manufacturing sequence and may also define at least one downward facing surface of the cavity or undercut region within the finished article. The planar member may be formed using an additive or non-additive manufacturing method that results in a high quality surface finish on the downward facing surface.

Although specific embodiments are illustrated and described herein, those of ordinary skill in the art will appreciate that all additions, deletions and modifications to the embodiments as disclosed herein and which fall within the meaning and scope of the claims may be substituted for the specific embodiments shown. Similarly, other embodiments of the invention may be devised which do not depart from the scope of the present invention. Such other embodiments are intended to be within the scope of the claims if they have structural elements that do not differ from the literal language of the claims, or if they include equivalent structural elements with insubstantial differences from the literal languages of the claims. Likewise, the system components illustrated are not limited to the specific embodiments described herein, but rather, system components can be utilized independently and separately from other components described herein. For example, the components and assemblies described herein may be employed in any suitable type of gas turbine, aircraft engine, or other turbomachine having any suitable number and arrangement of stages, disks and shafts while still falling within the meaning and scope of the claims.

Various aspects and embodiments of the present invention are defined by the following numbered clauses:
1. An article comprising:
   at least one first portion, wherein the at least one first portion is additively manufactured by depositing successive layers of one or more materials upon a surface such that a three dimensional structure is obtained;
   at least one second portion affixed the at least one first portion, the at least one second portion comprising a substantially planar member, and further comprising at least one bottom surface and at least one top surface; and
   at least one third portion, wherein the at least one third portion is additively manufactured by depositing successive layers of one or more materials upon the at least one top surface such that a three dimensional structure is obtained.
2. The article of clause 1, wherein the at least one first portion comprises a metal.
3. The article of any preceding clause, wherein the at least one second portion comprises a metal.
4. The article of any preceding clause, wherein the at least one third portion comprises a metal.
5. The article of any preceding clause, wherein the at least one second portion is formed using a non-additive manufacturing method.
6. The article of any preceding clause, wherein the at least one bottom surface comprises a downward facing surface within the finished article.
7. The article of any preceding clause, wherein the finish of the at least one bottom surface is less than about 10 microns.
8. The article of any preceding clause, wherein the at least one second portion is metallurgically bonded to the at least one first portion.
9. The article of any preceding clause, wherein the at least one second portion may be removed from the finished article.
10. A method of manufacturing an article comprising the steps of:
   preparing at least one first portion by depositing successive layers of one or more materials upon a surface such that a three dimensional structure is obtained;
   preparing at least one second portion comprising a substantially planar member, and further comprising at least one bottom surface and at least one top surface, wherein the at least one second portion is affixed to the at least one first portion; and
   preparing at least one third portion by depositing successive layers of one or more materials upon the at least one top surface such that a three dimensional structure is obtained.
11. The method of any preceding clause, wherein the at least one first portion comprises a metal.
12. The method of any preceding clause, wherein the at least one second portion comprises a metal.
13. The method of any preceding clause, wherein the at least one third portion comprises a metal.
14. The method of any preceding clause, wherein the at least one second portion is formed using a non-additive manufacturing method selected from the group consisting of machining, stamping, forging, rolling, and casting.
15. The method of any preceding clause, wherein the at least one bottom surface comprises at least one downward facing surface within the finished article.
16. The method of any preceding clause, wherein the finish of the at least one bottom surface is less than about 10 microns.
17. The method of any preceding clause, further comprising the step of metallurgically bonding the at least one second portion to the at least one first portion.
18. The method of any preceding clause, further comprising the step of removing the at least one second portion from the finished article.

## Claims

1. An article comprising:
at least one first portion, wherein the at least one first portion is additively manufactured by depositing successive layers of one or more materials upon a surface such that a three dimensional structure is obtained;
at least one second portion affixed the at least one first portion, the at least one second portion comprising a substantially planar member, and further comprising at least one bottom surface and at least one top surface; and
at least one third portion, wherein the at least one third portion is additively manufactured by depositing successive layers of one or more materials upon the at least one top surface such that a three dimensional structure is obtained.

2. The article of claim 1, wherein the at least one first portion comprises a metal.

3. The article of claim 1 or 2, wherein the at least one second portion comprises a metal.

4. The article of claim 1, 2 or 3, wherein the at least one third portion comprises a metal.

5. The article of any preceding claim, wherein the at least one second portion is formed using a non-additive manufacturing method.

6. The article of any preceding claim, wherein the at least one bottom surface comprises a downward facing surface within the finished article.

7. The article of any preceding claim, wherein the at least one second portion is metallurgically bonded to the at least one first portion.

8. The article of any preceding claim, wherein the at least one second portion may be removed from the finished article.

9. A method of manufacturing an article comprising the steps of:
preparing at least one first portion by depositing successive layers of one or more materials upon a surface such that a three dimensional structure is obtained;
preparing at least one second portion comprising a substantially planar member, and further comprising at least one bottom surface and at least one top surface, wherein the at least one second portion is affixed to the at least one first portion; and
preparing at least one third portion by depositing successive layers of one or more materials upon the at least one top surface such that a three dimensional structure is obtained.

10. The method of claim 9, wherein the at least one first portion comprises a metal.

11. The method of claim 9 or 10, wherein the at least one second portion comprises a metal.

12. The method of claim 9, 10 or 11, wherein the at least one third portion comprises a metal.

13. The method of any of claims 9 to 12, wherein the at least one second portion is formed using a non-additive manufacturing method selected from the group consisting of machining, stamping, forging, rolling, and casting.

14. The method of any of claims 9 to 13, wherein the at least one bottom surface comprises at least one downward facing surface within the finished article.

15. The method of any of claims 9 to 14, further comprising the step of metallurgically bonding the at least one second portion to the at least one first portion.
